# EUROPEAN PATENT APPLICATION

(11) **EP 4 744 956 A1**
(43) Date of publication of application: **20.05.2026**
(21) Application number: 24213534.1
(22) Date of filing: 18.11.2024
(51) Int. Cl.: B60N 2/06, B60N 2/42, B60N 2/427

(54) **A LOAD ABSORPTION DEVICE TO BE USED WITH A VEHICLE SEAT, A VEHICLE OCCUPANT PROTECTION SYSTEM USING SUCH DEVICE AND A METHOD OF OPERATING A SYSTEM**

(71) Applicant: Autoliv Development AB, 447 83 Vårgårda (SE)
(72) Inventor: RYDSMO, Erik, 447 83 Vårgårda (SE); ANDERSSON, Mikael, 447 83 Vårgårda (SE); DAHLGREN, Mikael, 447 83 Vårgårda (SE)
(74) Representative: AWA Sweden AB

(57) **Abstract**

Load absorption device (100) to be used with a vehicle seat (200) is provided. The device comprises a rail arrangement comprising an upper rail (1) configured to be connected to a lower side of the vehicle seat (200), and a lower rail (2) configured to be fixedly connected to a top surface of a vehicle floor. The upper and the lower rails are slidingly connected to each other to allow a longitudinal mutual displacement between the upper rail and the lower rail. The device further comprises a bracket (4) fixedly connected to the lower rail or configured to be fixedly connected to a floor of the vehicle, a strip (3) having first leg (15A) having a first end (16A), a second leg (15B) having a second end (16B), and a curved portion (15C) intermediate the first and second legs, and a locking arrangement having a first sub-arrangement (5) being fixedly connected to the bracket, and a second sub-arrangement (6) being releasably connected to the first sub-arrangement. The first leg is slidably arranged in the bracket, and the second leg is fixedly connected, directly or indirectly, to the upper rail and to the second sub-arrangement. Upon an actuation of the locking arrangement, the connection between the first and the second sub-arrangements is released, whereby the second sub-arrangement, the second end of the strip and the upper rail are allowed to displace in a first direction away from the bracket while the first end of the strip is allowed to translate in a second direction. Further a vehicle occupant protection system and a method of operating such system is provided.

## Description

### Technical field

The present invention refers to a load absorption device to be used with a vehicle seat, a vehicle occupant protection system using such device, and a method of operating a vehicle occupant protection system in a vehicle.

### Technical background

In recent years, automation in vehicle operations has significantly increased. Whereas historically, a driver of a vehicle was tasked with the complete operation of a vehicle in order to drive the vehicle, more and more electronic systems included in modern vehicles assist the driver while operating the vehicle or even relief the driver completely off by providing an autonomous vehicle operation. In some situations, a driver is even superfluous. In such a scenario the driver may assume a seating position which is different from a conventional driving seating position required for the direct operation of the vehicle by the driver. This development allows the driver to assume a more rearward seating position and also a more reclined position. The driver may even lay down. This applies already to the other occupants. A more reclined position does however cause problems in the event the vehicle should be subjected to an accident where a conventionally seated and belted person would be protected by the seatbelt and by one or more airbags.

Accordingly, a reclined seating position can introduce potentially unfavourable interactions between the seated person and the surrounding restraint systems, i.e., the lap belt and the seat pan. Examples of unfavourable interactions that can be seen in a fully reclined position are high head accelerations and neck extensions due to the absence of head restraining airbags. Another example is an increased risk of submarining. Further, there are increased spine forces and increased accelerations where the pelvis area contacts the seat pan. The latter results in an overall increased risk of pelvis and lumbar fractures. Research has found that one way to reduce the loads to the pelvis and lumbar spine, is to introduce a load limiting system to the seat that acts in the x- and/or z-directions of the vehicle.

### Summary

It is an object of the present invention to provide a load absorption device to be used with a vehicle seat.

The load absorption device should be adaptive to different external parameters, such as vehicle speed, inclination of the seat back and weight of the occupant.

The load absorption device should allow an easy adaption to different vehicle types, intended use of the vehicle, type of seat in the vehicle and different seat designs.

These and other objects that will be apparent from the following summary and description are achieved by a load absorption device according to the appended claims.

According to one aspect of the present invention, there is provided a load absorption device to be used with a vehicle seat, the device comprising:
a rail arrangement comprising an upper rail configured to be connected to a lower side of the vehicle seat, and a lower rail configured to be fixedly connected to a top surface of a vehicle floor; wherein the upper and the lower rails are slidingly connected to each other to allow a longitudinal mutual displacement between the upper rail and the lower rail;
a bracket fixedly connected to the lower rail or configured to be fixedly connected to a floor of the vehicle;
a strip having first leg having a first end, a second leg having a second end, and a curved portion intermediate the first and second legs; and
a locking arrangement having a first sub-arrangement being fixedly connected to the bracket, and a second sub-arrangement being releasably connected to the first sub-arrangement; and wherein
the first leg of the strip is slidably arranged in the bracket, and the second leg of the strip is fixedly connected, directly or indirectly, to the upper rail and to the second sub-arrangement; whereby
upon an actuation of the locking arrangement, the connection between the first and the second sub-arrangements is released, whereby the second sub-arrangement together with the second end of the strip and the upper rail is allowed to displace in a first direction away from the bracket while the first end of the strip is allowed to translate in a second direction opposite the first direction.

Accordingly, a load absorption device is provided in which energy from the accident is absorbed by the strip being deformed. The upper rail, the second sub-arrangement, and the second end of the strip are caused to be displaced in relation to the lower rail as a result of the inertial energy of the seat and/or a seated occupant in the event of an accident where the occupant is caused to move in the forward direction and the locking arrangement is caused to be actuated. The strip, when mounted in the device, can be seen as having a U-shape. The strip is oriented in relation to the two rails such that the first end of the strip is translated in a first direction and the second end of the strip is translated in second direction, opposite the first direction. This means that the first and second end of the strip will be forced away from each other by a substantially linear movement. During this translation, the relative lengths of the first and second legs will be changed, i.e., one leg will be shorter while the other leg will be longer. However, there will be no substantial elongation of the strip as such. The radius of the curved portion will be substantially the same during the whole translation. This allows for an efficient absorption of the inertial energy from the seat and the seated occupant during an accident. When used in a vehicle seat, there will thereby be a reduced risk of submarining and also a reduced force to the spine and pelvis area of a seated passenger.

The properties of the strip may be adapted during the design phase of the vehicle depending on parameters such as type of vehicle, type of seats in the vehicle, expected seating position during normal use, and expected weight of the average seat occupant. Non-limiting examples of properties of the strip that may be adapted are the type of material in the strip, such as tensile strength, and the cross-sectional area of the strip as seen transverse its longitudinal extension. Accordingly, all seats in one and the same vehicle may be provided with a load absorption device, but the individual devices may be equipped with different strip designs.

In the event of an accident, it is important that all safety mechanisms in the vehicle are activated quickly to protect passengers as effectively as possible since the forces involved in a collision are large and act almost instantaneously. Without quick activation of safety features, the occupant's body would be left unprotected against these sudden forces, increasing the risk of severe injuries.

The first sub-arrangement may comprise a tube defining a gas chamber, said tube containing an ignitor, and said first sub-arrangement further comprising a split-nut that lockingly engages the first sub-arrangement to the second sub-arrangement.

The split-nut may be arranged inside the tube. The split-nut is preferably arranged in the gas chamber or in proximity of the gas chamber. The ignitor may be arranged within the gas chamber such that the gas pressure that results from the ignition of the ignitor act on the split-nut, and/or on surrounding components to thereby allow the split-nut to break. The connection between the first and the second sub-arrangements will be released when the split-nut breaks, whereby the second sub-arrangement, the second end of the strip and the upper rail are allowed to displace in a first direction away from the bracket while the first end of the strip is allowed to translate in a second direction opposite the first direction.

The split-nut is arranged to lockingly engage the first sub-arrangement with the second sub-arrangement during normal operation condition. The second sub-arrangement will accordingly have a fixed position relative to the lower rail during normal operation condition. The locking engagement between the first and second sub-arrangements is configured to be released in the event of an accident. Like in any other safety system in a vehicle, occurrence of an accident is determined by the vehicle's ECU (Electrical Control Unit) based on information from one or more sensors. If the accident is determined to be of such severity that it can be mitigated by an activation of the load absorption device of the invention, this is made by activating the ignitor. Ignitors as such are well known in the art. It may by way of example be a pyrotechnical ignitor that develops a pressurized gas.

The *"normal operation condition"* should in the context of the invention be understood as a condition when the vehicle, and hence the load absorbing device is not subjected to any accident.

The split-nut may be configured to split upon actuation of the locking arrangement, i.e., upon ignition of the ignitor, to thereby release the locking engagement between the first and second sub-arrangements.

The split-nut may comprise one or more fracture lines. The fracture lines may be portions of the split-nut where the walls of the split-nut are locally weakened to enable the split-nut to split upon actuation of the locking arrangement. The split-nut may alternatively be formed by two or more discrete elements that are forced together in the radial direction into a locking engagement with another member, in this case the second sub-arrangement. The split-nut may be referred to as a frangible nut.

Having the first sub-arrangement comprising an ignitor and a split-nut is advantageous as it provides for a quick release of the second sub-arrangement.

The ignitor may be a pyrotechnic ignitor, or any type of ignitor commonly known in the art.

The locking arrangement may be configured to communicate with an ECU (Electrical Control Unit) of the vehicle. The locking arrangement is as a default set to a locked position during the normal operation of the vehicle. The second sub-arrangement and the second end of the strip are thereby prevented from displacement relative to the lower rail during the normal operation of the vehicle. In the event of an accident, a processor of the ECU determines, based on signals from at least one accident sensor, that there is an imminent or an ongoing vehicle accident, and, based on a seating position sensor element that indicates that the seating is set to a certain position where there is a risk for a submarining, the ECU will instruct the locking arrangement to be actuated. Thereby the second sub-arrangement together with the second end of the strip and the upper rail will be allowed to displace in the first direction away from the bracket while the first end of the strip is allowed to translate in a second direction opposite the first direction.

Another parameter that may be used as input to the ECU to determine if the locking arrangement should be unlocked or not, is the speed of the vehicle. If the speed is below a certain threshold value, the loads from the accident will thereby be handled by other safety systems in the vehicle.

The skilled person realizes that the locking arrangement, as an alternative to a split-nut, may comprise an electromechanical unlocking element, or an electromagnetic unlocking element. The locking arrangement may by way of example be in the form of a locking pin that engages the upper and lower rails and which is pulled/pushed out of locking engagement by means of the unlocking element.

The split-nut may lockingly engage the second sub-arrangement in the radial direction, and an ignition of the ignitor may be configured to cause an axial displacement of the tube in view of the split-nut, thereby forming a radial gap between the tube and the split-nut allowing the split-nut to release its locking engagement with the second sub-arrangement.

The split-nut may have an inner threaded wall. The threaded wall may engage with a threaded portion of the second sub-arrangement to lockingly engage the split-nut with the second sub-arrangement. The threaded engagement will be released automatically when the split-nut splits.

The tube is preferably positioned to prevent the split-nut from expanding in the radial direction during normal operation of the load absorption device. This positioning is beneficial because the split-nut may be fragile. Without the tube providing circumferential support, the split-nut could fracture under the compressive force exerted by the second sub-arrangement when they lock together. The tube may be movable from a first position, in which it restrains the split-nut from radial expansion, to a second position, in which it permits the split-nut to radially expand and thereby split to thereby release its locking engagement with the second sub-arrangement.

As long as the locking arrangement is not activated, the tube is held in the first position in which it secures the locking function of the split-nut. The locking arrangement is activated, e.g., by igniting the ignitor, when there is a need to release the locking engagement between the first and second sub-arrangements of the locking arrangement. Upon actuation of the locking arrangement, the tube is forced to be axially displaced from the first position to the second position in which it no longer restrains the split-nut from radial expansion.

The tube may comprise an inner circumferential wall comprising portions having different dimensions. A first portion of the inner circumferential wall may have a first diameter and a second portion of the inner circumferential wall may have a second diameter. The first diameter may be smaller than the second diameter.

During a normal operation condition of the load absorption device, the tube may be arranged in the first position and the split-nut may be radially overlapped by the first portion of the tube. The outer diameter of the split-nut may be equal to or slightly smaller than the inner diameter of the first portion of the tube such that the tube restrains the split-nut from radial expansion.

During the event of a determined accident, the tube may be forced to be axially moved by, e.g., a force generated by ignition of a pyrotechnical charge in the ignitor, into a second position. As the tube is displaced in view of the split-nut, the split-nut is positioned to be radially overlapped by the second portion of the tube. The second portion of the tube may have a diameter being larger than the outer diameter of the split-nut, whereby a radial gap is formed between the tube and the split-nut that allows the split-nut to release its locking engagement with the second sub-arrangement.

The first sub-arrangement may further comprise a connector, said connector encircling a portion of the second sub-arrangement and forming an axially extending first guiding surface along an interface between the first sub-arrangement and the second sub-arrangement.

The connector may be configured to connect the first sub-arrangement to the bracket.

When the connection between the two sub-arrangements is released, the connector guides the second sub-arrangement linearly along the first direction. This guidance helps to ensure good load absorption capabilities, as it prevents any tilting, misalignment, or lateral movement, and keeps the second sub-arrangement steady along the intended path.

A portion of the tube may encircle an outer circumference of the connector such that the tube is slidably connected to the connector. In such embodiment, the connector forms an axially extending second guiding surface along an interface between the tube and the connector. The second guiding surface allows the tube to be displaced in relation to the connector and the split-nut as a result of an ignition of the ignitor which causes the tube to be moved to the second position to thereby form the radial gap that is required to allow the split-nut to expand and split.

An outer portion of the connector may form a third guiding surface between the second leg of the strip and the connector. The third guiding surface may form a linear guide during actuation of the locking arrangement as the second end of the strip is displaced in the first direction away from the bracket and the strip re-shapes and absorbs the load.

The second sub-arrangement may be a rod extending along the longitudinal extension of the upper and lower rails, and wherein said rod directly or indirectly connects to the upper rail.

The rod may be connected to an electric seat adjustment device which is configured to movably connect the upper rail to the rod. It is to be understood that during a normal operation condition of the load absorption device, and the vehicle seat, the upper rail may be moved along the second sub-arrangement to adjust the seating position.

The upper rail may be connected to the rod by a rotating nut. The rotating nut may be permitted to travel along the extension of the rod by an electrical motor to change the position of the vehicle seat that is connected to the upper rail. This kind of mechanism to set the longitudinal position of the vehicle seat is well known in the art. The rod may comprise at least a portion which is treaded. The rotating nut may comprise complementary threads such that the rotating nut may travel along the threaded portion of the rod.

As an alternative to an electrical setting mechanism of the vehicle seat, a strict mechanical setting mechanism may be used. The second sub-arrangement may by way of example be directly or indirectly connected to the upper rail by any commonly known arrangement allowing the upper rail during normal operation condition of the load absorption device to be positionally adjusted relative the lower rail. As an example, the second sub-arrangement may be a rod having a plurality of holes or have a structure including indentations or protrusions which a portion of the upper rail, or a part connected to the upper rail, releasably engages with to allow adjustment of the seat position.

The first leg may extend along an exterior side wall portion of the lower rail. Thereby, the strip does not have to be limited to be arranged in the space between the first and second rail. This may be advantageous as it provides for a more space-efficient design.

The bracket may comprise at least one guiding member having an extension along a longitudinal extension of the bracket, said guiding member being configured to longitudinally guide the first leg along the bracket. The first end of the strip can thereby translate along the second direction with guided alignment when the connection between the two sub-arrangements is released. This guidance helps to ensure good load absorption capabilities, as it prevents any tilting, misalignment, or lateral movement, and keeps the second end of the first leg steady along the intended path.

The bracket may comprise two or more guiding members that are distributed along the longitudinal extension of the bracket.

The bracket may comprise a curved support element, and the curved portion of the strip may be configured to partially encircle said curved support element. Hence, the inner wall of the curved portion of the strip is configured to be arranged along the outer curvature of the curved support element.

The first leg or the second leg may along its longitudinal extension comprise a tapered portion tapering in a direction towards the curved portion.

By the tapered portion, the energy consumption, and hence the load absorption effect, will increase progressively as the curved portion is forced to translate along the tapered longitudinal extension of a leg of the strip towards a relatively wider portion of the strip, i.e., towards a larger cross-sectional area of the strip. In other words, as the cross-sectional area of the strip progressively increases, the more energy is required to reshape the strip during the translation of the curved portion.

The tapering angle may be adapted in the design phase of the vehicle depending on the expected use of the energy absorption device. The larger tapering angle, the more progressive load absorption. Hence, the strip may be provided with a desired load absorption profile that is adapted to a specific design criterion. As a non-limiting example to exemplify the principle: a low tapering angle, e.g., 1-10 degrees may be favourable in applications where an accident involves relatively low inertial forces, or where the weight of the expected seat occupant is relatively low, such as child. Correspondingly, a higher tapering angle, e.g. 10-30 degrees may be favourable in applications where an accident involves relatively high inertial forces, or where the weight of the expected seat occupant corresponds to a 50 percentile adult. By providing the strip with two subsequent tapered portions with different angles, a strip may be provided that can meet both situations.

The tapered portion may be arranged adjacent the curved portion as seen in a normal operation of the load absorption device.

The tapered portion may have the same tapering along two opposing longitudinally extending edge portions of the strip. Hence, the tapering may be symmetric along the opposing sides.

The tapered portion may have a progressively increasing cross sectional area.

The tapered portion may have a straight-linear longitudinal extension. The skilled person realizes that other geometries may be used, such as a single-curved longitudinal extension. The single-curved extension is preferably concave as seen in view of a longitudinal centerline of the strip. In yet another embodiment, the strip may have a step-shaped configuration with a progressively increased cross-sectional area along the longitudinal extension of the strip.

The tapered portion may have a first tapered portion with a first tapering angle in view of a longitudinal centerline of the strip, and a second tapered portion with a second tapering angle in view of the longitudinal centerline of the strip, wherein the second tapering angle is larger than the first tapering angle.

The tapering angle may be adapted in the design phase of the vehicle depending on the expected use of the energy absorption device. The larger tapering angle, the more progressive load absorption. Hence, the strip may be provided with a desired load absorption profile that is adapted to a specific design criterion. As a non-limiting example to exemplify the principle: a low tapering angle, e.g., 1-10 degrees may be favourable in applications where an accident involves relatively low inertial forces, or where the weight of the expected seat occupant is relatively low, such as child. Correspondingly, a higher tapering angle, e.g., 10-30 degrees may be favourable in applications where an accident involves relatively high inertial forces, or where the weight of the expected seat occupant corresponds to a 50 percentile adult. By providing the strip with two subsequent tapered portions with different angles, a strip may be provided that can meet both situations.

According to another aspect of the invention a vehicle occupant protection system is provided. The vehicle occupant protection system comprises:
a vehicle seat configured to accommodate an occupant;
a load absorption device according to any of claims 1-12, wherein the rail arrangement is configured to connect the vehicle seat to a vehicle floor;
an accident sensor element adapted for determining an imminent or ongoing vehicle accident; and
a seating position sensor element adapted for determining a seating position;
wherein, upon the determination that the rails in the rail arrangement are displaced to a position where the seat is set in a rearward seating position and the occurrence of an imminent or ongoing vehicle accident, the locking arrangement is configured to be actuated, to thereby allow the second sub-arrangement, the second end of the strip and the upper rail to be displaced in the first direction away from the first sub-arrangement and the bracket, and thereby allow the seat to be slid from the rearward seating position towards a conventional driving seating position;
whereby the sliding of the seat from the rearward seating position towards the conventional driving seating position is performed by using inertial energy from the vehicle accident while the strip is forced to deform and thereby absorb inertial energy of the seat and/or a seated occupant.

In the context of the present invention, the term *"conventional driving seating position"* is to be understood as the intended normal seating position for which a seatbelt system and an airbag system in the vehicle is designed.

The design and functionality of the load absorption device as such has been thoroughly described above. The design and functionality are equally applicable to a vehicle occupant protection system using such device. Hence, to avoid undue repetition, reference is made to the sections above discussing the device.

According to yet another aspect, the invention refers to a method of operating a vehicle occupant protection system in a vehicle, where the vehicle comprises:
a seat for accommodating an occupant, wherein the seat is slidably connected to the vehicle by a load absorption device according to any of claims 1-12,
the method comprising:
   determining, by using an accident sensor element, an imminent or ongoing vehicle accident;
   determining, by using a seating position sensor element, a seating position;
   upon the determination of the seat being in a rearward seating position and the occurrence of an imminent or ongoing vehicle accident:
      actuating the locking arrangement, thereby releasing the connection between the first and the second sub-arrangements to thereby allow the sliding of the seat from the rearward seating position towards a conventional driving seating position, and using inertial energy from the vehicle accident to slide the seat from the rearward seating position towards the conventional driving seating position while inertial energy of the seat and/or a seated occupant is absorbed by a deformation of the strip in the load absorption device.

The design and functionality of the load absorption device as such has been thoroughly described above. The design and functionality are equally applicable to the method of operating a vehicle occupant protection system which uses such device. Hence, to avoid undue repetition, reference is made to the sections above discussing the device.

Further objects and advantages of the present invention will be obvious to a person skilled in the art reading the detailed description given below describing different embodiments.

It may be noted that the use of first, second, third, fourth, fifth, etc. are mainly to be seen as labels facilitating reading and that it does not necessarily mean that there need to be all the intervening numbers of portions present. It may e.g. be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The invention will be described in detail with reference to the schematic drawings.
Fig. 1 schematically discloses the load absorption device arranged on a vehicle seat.
Fig. 2 discloses an exploded view of the components that are part of the load absorption device.
Figs. 3A-3C schematically disclose the operation of the load absorption device in a normal operation condition and in a condition where the energy absorption has been initiated.
Fig. 4A schematically discloses a cross sectional top view of the load absorption device in a normal operation condition.
Fig. 4B discloses one example of a split-nut in a normal operation condition.
Fig. 4C schematically discloses a cross sectional top view of the load absorption device where the ignitor has been activated.
Fig. 4D schematically discloses a cross sectional top view of the load absorption device where the split-nut has broken but where the second sub-arrangement has not yet been displaced.
Fig. 4E discloses the broken split-nut.
Fig. 4F schematically disclose a cross sectional top view of the load absorption device where the locking arrangement is fully deployed, and the load absorption has been initiated.
Figs. 5A and 5B schematically disclose the absorbed force as a function of the mutual displacement between the upper and lower rails and thereby the deformation of the strip.
Fig. 6 schematically illustrates the method of operating a system using such device.

### Detailed description

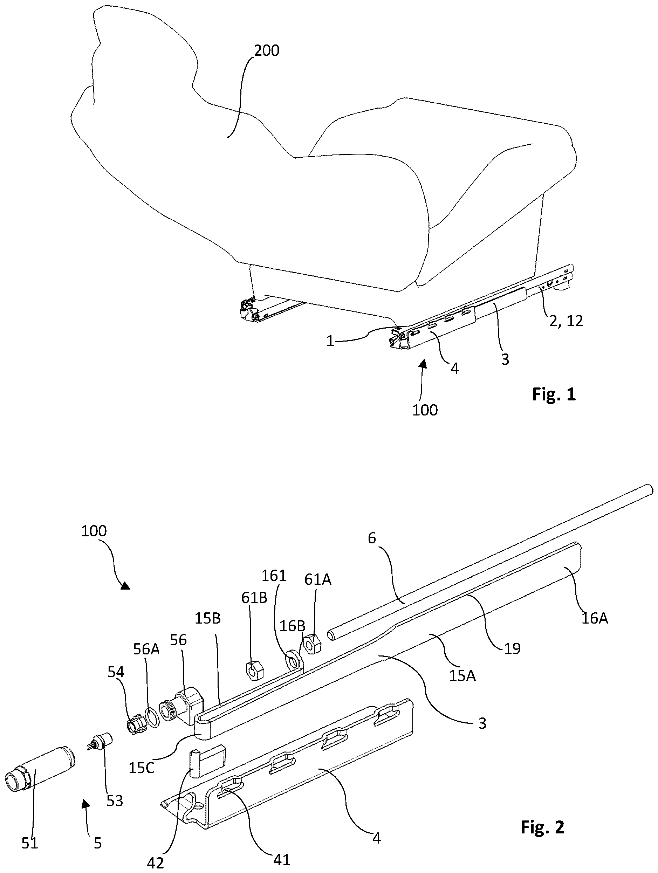

With reference to Fig. 1, a vehicle seat 200 connected to an upper rail 1 of the load absorption device 100 is disclosed. The device 100 comprises a rail arrangement in the form of an upper rail 1, a lower rail 2, and a strip 3. The upper rail 1 is configured to be slidingly received in and along the lower rail 2. The strip 3 extends along an exterior side wall portion 12 of the lower rail 2.

In short, during a normal operation condition of the load absorption device 100, the vehicle seat 200 connected to the upper rail 1 is allowed to be positionally adjusted relative the lower rail 2. In the event of an accident, the vehicle seat 200 is configured to be translated from a rearward seating position towards the conventional driving seating position by using the inertial energy from the vehicle accident, or a sudden emergency stop. The strip 3 is then forced to deform and thereby absorb inertial energy of the seat 200 and/or a seated occupant. When the load absorbing device 100 is used in a vehicle seat 200, there will be a reduced risk of submarining and also a reduced force to the spine and pelvis area of a seated passenger.

With reference to Fig. 2, the overall design of a load absorption device 100 to be used with a vehicle seat 200 is shown as an exploded view. The rail arrangement with the upper and lower rails have been omitted. The load absorption device 100 comprises a strip 3 having first leg 15A having a first end 16A, a second leg 15B having a second end 16B, and a curved portion 15C intermediate the first and second legs 15A, 15B. The second end 16B is provided with a connector that extends perpendicular to the second leg 15B. The second leg 15B of the strip 3 is thereby L-shaped. The properties of the strip may be adapted during the design phase of the vehicle depending on parameters such as type of vehicle, type of seats in the vehicle, expected seating position during normal use, and expected weight of the average seated occupant. Non-limiting examples of properties of the strip that may be adapted are the type of material in the strip, such as tensile strength, and the cross-sectional area of the strip as seen transverse its longitudinal extension.

The device 100 further comprises a bracket 4 configured to be fixedly connected to the lower rail 2 or the floor of the vehicle. The bracket 4 is configured to provide a guide support to the strip 3 during activation of the load absorption device 100. The strip 3 is configured to be slidably arranged in the bracket 4. The bracket 4 comprises a plurality of guiding members 41 being distributed along the longitudinal extension of the bracket 4. The guiding members 41 are configured to provide a support to the strip 3 at an upper edge 19 thereof such that the first leg 15A of the strip 3 can translate along the second direction L2 with guided alignment. This will be further described below. This guidance helps to ensure good load absorption capabilities, as it prevents any tilting, misalignment, or lateral movement, and keeps the first leg 15A steady along the intended path.

The bracket 4 comprises a curved support element 42. The support element 42 is configured to be fixedly connected to the bracket 4. The curved portion 15C of the strip 3 is configured to partially encircle said curved support element 42. Hence, an inner wall portion of the curved portion 15C of the strip 3 is configured to be arranged along an outer wall portion of the curvature of the curved support element 42. The strip 3 can, when mounted in the device 100, be seen as having a U-shape where the first and second legs 15A, 15B are arranged in parallel.

The device 100 further comprises a locking arrangement 5, 6 which in Fig. 2 is shown in an exploded view. The locking arrangement 5, 6 comprises a first sub-arrangement 5 configured to be fixedly connected to the bracket 4, and a second sub-arrangement 6 configured to be releasably connected to the first sub-arrangement 4 by a split-nut 54. The first sub-arrangement 5 comprises the split-nut 54, a connector 56, an ignitor 53, and a tube 51 defining a gas chamber 52. The connector 56 is configured to connect the first sub-arrangement 5 to the bracket 4.

As will be further described below, the parts of the first sub-arrangement are connected to each other by arranging a portion of the tube 51 to encircle an outer circumference of the connector 56 such that the tube 51 is slidably connected to the connector 56. Moreover, the ignitor 53 is arranged within the gas chamber 52. The split-nut 54 is also preferably arranged in the gas chamber 52 or in proximity of the gas chamber 52. The ignitor 53 is configured to be ignited in the event of an accident to thereby cause an axial displacement of the tube 51 in view of the split-nut 54 and the connector 56. The ignition of the ignitor 52 will cause development of a pressurized gas that acts on the split-nut 54, or on surrounding components, to thereby allow the split-nut 54 to break.

The locking arrangement 5, 6 further comprises an O-ring 56A. The O-ring 56A is configured to seal the connection between the tube 51 and the connector 56.

The second sub-arrangement 6 is a rod that extends along the longitudinal extension of the upper and lower rails 1, 2. The rod 6 is directly or indirectly connected to the upper rail 2. The rod 6 may be connected to an electric seat adjustment device or a mechanical setting mechanism, not shown, which is configured to movably connect the upper rail 1 to the rod 6. It is to be understood that during a normal operation condition of the load absorption device 100, the upper rail 1 may be moved along the second sub-arrangement 6 to adjust the seating position.

The strip 3 is configured to be fixedly connected to the second sub-arrangement 6. The second end 16B of the strip 3 comprises an aperture 161, as best seen in Fig. 2. The second sub-arrangement 6 is configured to be inserted through the aperture 61 and the strip 3 is locked in place relative the second sub-arrangement 6 by two nuts 61A, 61B that are arranged on opposite sides of the second end 16B of the strip 3.

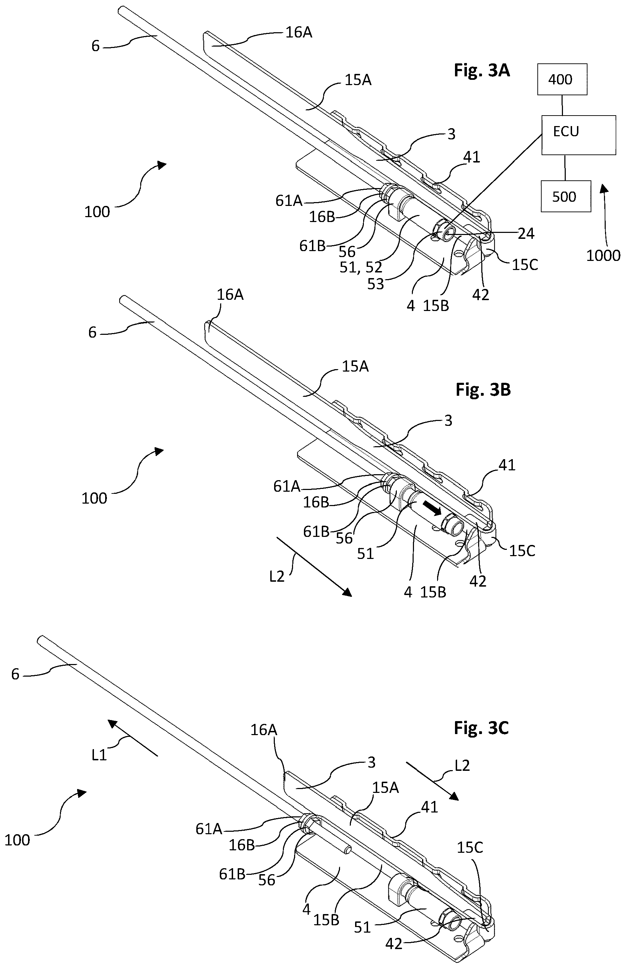

With reference to Figs. 3A-3C, different conditions of the load absorbing device 100 are shown. The upper and lower rails 1, 2 are omitted in Figs. 3A-3C for easier illustration of the strip 3 and the locking arrangement. The exterior side wall portion 12 of the lower rail 2 is configured to be arranged between the first and second legs 15A, 15B of the strip 3 such that the first leg 15A extends along an outer side of the exterior side wall portion 12 and so that the second leg 15B of the strip extends along an inner side of the exterior side wall portion 12. The outer side faces the bracket 4 and the inner side faces the locking arrangement.

Fig. 3A shows the device 100 in a normal operation condition. The strip 3 is slidably arranged in the bracket 4 and connected to the second sub-arrangement 6 at the second end 16B by the two nuts 61A, 61B. The strip 3 has a U-shape where the curved portion 15C of the strip 3 is arranged along the curvature of the curved support element 42.

The locking arrangement 5, 6 may be configured to communicate with an ECU (Electrical Control Unit) of the vehicle. The locking arrangement 5, 6 comprises, as is best seen in Fig. 3A, a connecting interface 24 to allow the locking arrangement 5, 6 to be connected to the ECU. The locking arrangement 5, 6 is as a default set to a locked position during the normal operation of the vehicle.

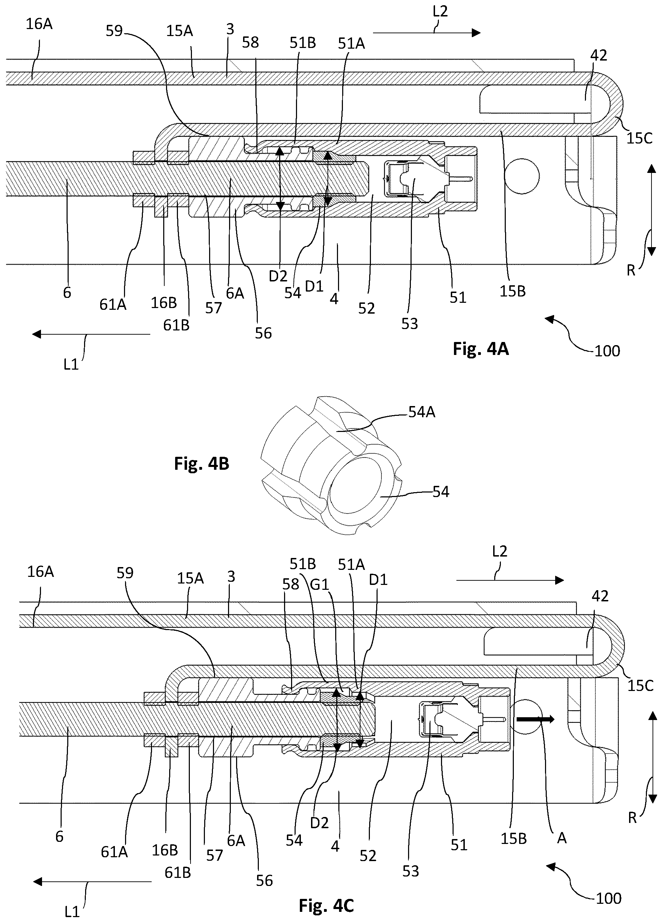

The second sub-arrangement 6 and the second end 16B of the strip 3 are thereby prevented from displacement relative to the lower rail 2 during the normal operation of the vehicle. If a processor of the ECU determines, based on signals from at least one accident sensor, that there is an imminent or an ongoing vehicle accident, the ECU will instruct the locking arrangement 5, 6 to actuate. When the ECU instructs the locking arrangement 5, 6 to actuate, the ignitor 53 is ignited such that a gas pressure is created in the gas chamber 52 and causes the tube 51 to be displaced in the second direction L2, visualized by the arrow in Fig. 3B. When the tube 51 has been displaced, the locking engagement between the split-nut 54 and the second sub-arrangement 6 is removed, which will be discussed in further detail with reference to Figs. 4A-4F.

When the locking engagement 5, 6 is removed, the second sub-arrangement 6, the second end 16A of the strip 3 and the upper rail (omitted in Figs 3A-3C) are together allowed to displace in a first direction L1 away from the bracket 4 while the first end 16A of the strip 3 is allowed to translate in the second direction L2, opposite the first direction L1, as shown in Fig. 3C. This means that the first and second end 16A, 16B of the strip 3 will be forced away from each other by a substantially linear movement. During this translation, the relative lengths of the first and second legs 16A, 16B will be changed, i.e., the first leg 15A will become shorter while the second leg 15B will become longer. However, there will be no substantial elongation of the strip 3 as such. The radius of the curved portion 15C will be substantially the same during the whole translation. This allows for an efficient energy absorption of the inertial energy from the seat 200 and the seated occupant during an accident.

As best seen in Fig. 3C, the guiding members 41 of the bracket 4 longitudinally guide the first leg 15A along the bracket 4 such that first end 16A of the strip 3 can translate along the second direction L2 with guided alignment.

Now turning to Figs. 4A-4F, a more detailed view of the locking arrangement 5, 6 during its deployment, i.e., actuation, is shown.

Fig. 4A shows the device 100 in a normal operation condition. The connector 56 encircles a portion 6A of the second sub-arrangement 6 and forms an axially extending first guiding surface 57 along an interface between the first sub-arrangement 5 and the second sub-arrangement 6.

The tube 51 is disclosed as being in a first position and a portion of the tube 51 encircles an outer circumference of the connector 56 such that the tube 51 is slidably connected to the connector 56. In such embodiment, the connector 56 forms an axially extending second guiding surface 58 along an interface between the tube 51 and the connector 58.

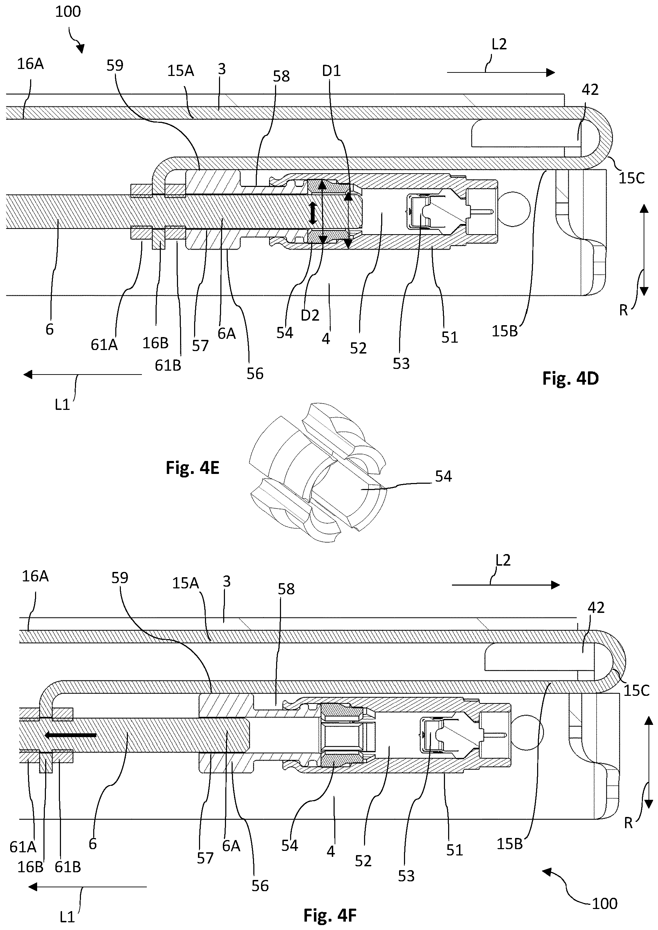

The tube 51 comprise an inner circumferential wall comprising portions having different dimensions, as shown in Figs. 4A, 4C, 4D, 4F. A first portion 51A of the inner circumferential wall has a first diameter D1, and a second portion 51B of the inner circumferential wall has a second diameter D2. The first diameter D1 is smaller than the second diameter D2. During a normal operation condition of the load absorption device 100, as shown in Fig. 4A, the tube 51 is arranged in the first position and the split-nut 54 is radially overlapped by the first portion 51A of the tube 51. The outer diameter of the split-nut may be equal to or slightly smaller than the inner diameter D1 of the first portion 51A of the tube 51. The tube 51 thereby restrains the split-nut 54 from radial expansion, i.e., the split-nut 54 is kept intact as shown in Fig 4B.

The split-nut 54 is arranged to lockingly engage the first sub-arrangement 5 with the second sub-arrangement 6 during normal operation condition. The second sub-arrangement 6 will accordingly have a fixed position relative to the lower rail (omitted in Figs 4A, 4C, 4D, 4F) during normal operation condition. The split-nut 54 lockingly engages the second sub-arrangement 6 in the radial direction R. The locking engagement between the first and second sub-arrangements 5, 6 is configured to be released in the event of an accident.

As shown in Figs. 4A and 4C, the split-nut 54 has an inner threaded wall. The threaded wall is engaged with a threaded portion of the second sub-arrangement 6 to lockingly engage the split-nut 54 with the second sub-arrangement 6. The threaded engagement will be released when the split-nut 54 splits.

Referring to Fig. 4C, the tube 51 has been displaced in the second direction L2 to a second position due to a rapidly increased gas pressure caused by an ignition of the ignitor 53, as illustrated by the arrow A.

The tube 51 is displaced in relation to the split-nut 54 and along the second guiding surface 58 of the connector 56. As a result of the displacement, the tube 51 is transferred from the first position to a second position and the split-nut 54 is now positioned to be radially overlapped by the second portion 51B of the tube 51. The diameter D2 of the second portion 51B of the tube 51 is larger than the diameter D1 of the inner circumferential wall of the first portion 51A of the tube. In the second position of the tube 51, a radial gap G1 is formed between the inner circumferential wall of the tube 51 and the outer circumferential wall of the split-nut 54.

As shown in Fig. 4D, the split-nut 54 has radially expanded into the radial gap G1 as the tube 51 is in a second position and no longer provides a circumferential support. Accordingly, the split-nut 54 will fracture when the tube 51 no longer provides any circumferential support. The split-nut 54 comprises one or more fracture lines 54A, as shown in Fig. 4B. The fracture lines 54A may be portions of the split-nut 54 where the walls of the split-nut 54 are locally weakened to enable the split-nut 54 to split upon actuation of the locking arrangement, as shown in Fig 4E. The skilled person realizes that the split-nut as such may have other designs. The split-nut may by way of example be formed by two or more discrete segments that are forced together in the radial direction and held in position by means of the tube.

When the split-nut 54 splits, it releases its locking engagement with the second sub-arrangement 6, and the second sub-arrangement 6 is allowed to displace in a first direction L1 away from the bracket 4, as shown in Fig. 4F. Since the strip 3 is fixedly connected to the second sub-arrangement 6, the second end 16B of the strip 3 is also displaced in the first direction L1 while the first end 16A of the strip 3 is displaced in the second direction L2.

When the connection between the two sub-arrangements 5, 6 is released, the first guiding surface 57 of the connector 56 guides the second sub-arrangement 6 linearly along the first direction L1. This guidance helps to ensure good load absorption capabilities, as it prevents any tilting, misalignment, or lateral movement, and keeps the second sub-arrangement 6 steady along the intended path.

An outer portion of the connector 56 forms a third guiding surface 59 between the second leg 15B of the strip 3 and the connector 56. The third guiding surface 59 may form a linear guide during deployment of the locking arrangement 5, 6 as the second end 16B of the strip 3 is displaced in the first direction L1 away from the bracket 4 and the strip 3 re-shapes and absorbs the load.

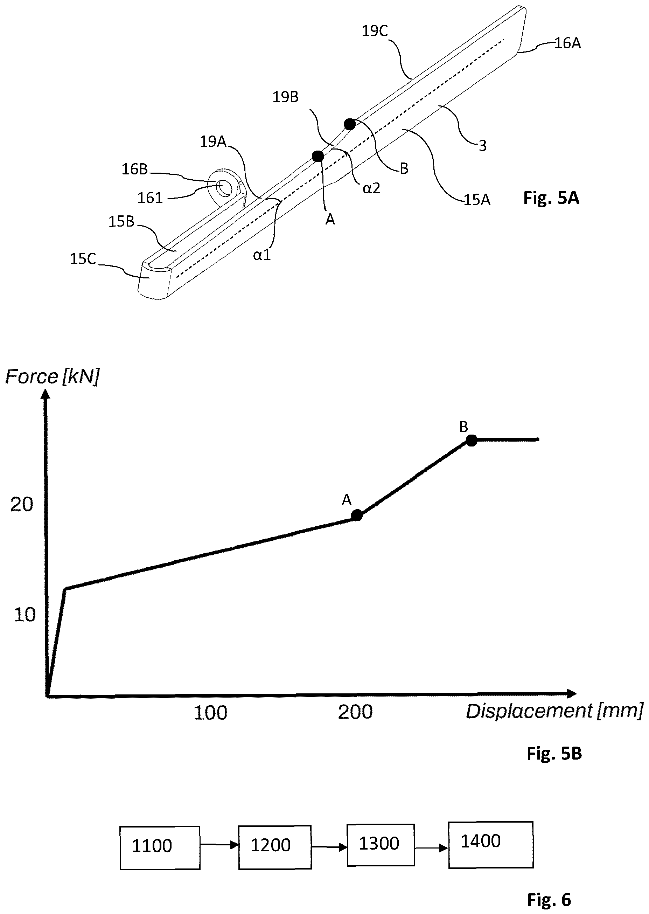

Now turning to Figs. 5A and 5B. Fig. 5A discloses one example of a strip 3 with two subsequent tapered portions. The first tapered portion 19A has a first tapering angle α1 in view of the longitudinal centerline of the strip 3. The second tapered portion 19B has a second tapering angle α2 in view of the longitudinal centerline of the strip 3. The second tapering angle α2 is larger than the first tapering angle α1. The first tapered portion 19A is arranged adjacent the curved portion 15C as seen in the normal operation condition of the strip 3. Fig. 5B is a graph that discloses the absorbed force versus the displacement between the lower rail that is fixed to the floor of the vehicle and the second sub-arrangement connected to the upper rail, which is connected to the vehicle seat. The graph accordingly discloses the force versus the translation distance of the second end 16B of the strip 3 during such displacement. Point A in the graph indicates a displacement between the lower rail 2 and the second sub-arrangement 6 where the second end 16B, fixedly connected to the second sub-arrangement, has been translated to such extent that the position where the first tapered portion 19A merges with the second tapered portion 19B reaches the curved portion 15C of the strip 3. Equally, point B in the graph indicates a displacement between the lower rail 2 and the second sub-arrangement 6 where the second end 16B has been translated to such extent that the position where the second tapered portion 19B merges with the portion 19C of the strip 3 that has a uniform width reaches the curved portion 15C. As can be seen from the graph, the geometry of the strip 3 with its progressively increasing cross-sectional area as seen along the longitudinal extension of the strip 3 allows a progressive absorption of the load and hence a progressive absorption of energy from an accident. During this translation, the relative lengths of the first and second legs will be changed, i.e., the first leg 15A will be shorter while the second leg 15B will be longer. However, there will be no substantial elongation of the strip 3 as such. The radius in the curved portion 15C will be substantially the same during the whole translation.

Although the graph illustrates the performance of a strip with two tapered portions merging with a straight portion with a uniform width and hence uniform cross-sectional area, the same principle applies to other strip geometries, i.e., for strips having other geometries as seen along their longitudinal extensions. The wider strip and hence larger cross-sectional area, the more energy is required to deform the strip, and hence a higher load absorption.

The strip 3 has been disclosed as a strip having a tapered shape with two tapering portions 19a, 19B arranged one after the another and merging with a portion 19C with constant width and hence a constant cross-sectional area. Also, the tapering portions have been described as having straight-linear edge portions. The skilled person realizes that the same effect of achieving a progressively increasing cross-sectional area along the longitudinal extension of the strip may be achieved with other geometries. The edge portions may by way of example have a single-curved extension as seen along the longitudinal extension of the strip. Alternatively, the edge portions may have a step-shaped geometry. Also, one tapering portion only, or three or more tapering portions may be applied. Also, the tapering angles may be changed.

Now turning to Figs. 1 and 3A, the practical operation of the load absorption device 100 as part of a vehicle occupant protection system will be described. The system comprises a vehicle seat 200 that is configured to accommodate an occupant (omitted). The seat is connected to two load absorption devices 100 of the type that has been describe above. The skilled person realizes that it is sufficient with only one load absorption device per seat. The fixation of the devices 100 to the floor may be made e.g., by bolting. The occupant can set the inclination of the back rest and also move the seat 200 back and forth to a comfortable position. The setting of the seat is as such well known in the art and not further described.

Each load absorption device 100 comprises a locking arrangement 5, 6 that is configured to selectively lock the vehicle seat 200 in a defined seating position. This locking prevents mutual displacement between the lower rail 2 and the second sub-arrangement 6. Upon actuation of the locking arrangement, the load absorption device 100 is unlocked, allowing the mutual displacement. Preferably, the locking arrangement 5, 6 is set to a locked position by default during normal operation of the vehicle. In the default setting, displacement of the lower rail 2 and the second sub-arrangement 6 is prevented.

The system 1000 comprises at least one accident sensor element 400 that is adapted for determining an imminent or ongoing vehicle accident. The system 1000 further comprises a seating position sensor element 500 adapted for determining a seating position. The sensor 500 may by way of example determine the inclination of the back rest and the position of the seat 200 in view of the dashboard or steering wheel. These types of sensors are well known in the art and are not further discussed.

The sensors 400, 500 and locking arrangements are in turn arranged to communicate with an ECU of the vehicle. In the event a processor of the ECU, based on signals from the accident sensor element 400 determines that there is an imminent or an ongoing vehicle accident, and that the seating position sensor element 500 indicates that the seating is set to a certain position where there is a risk for a submarining, the ECU will instruct the locking arrangement to unlock. Thereby the second sub-arrangement 6 and the lower rail 2 will be allowed to be mutually displaced to thereby allow a load absorption by the strip 3. Another parameter that may be used as input to the ECU to determine if the locking arrangement should be unlocked or not is the speed of the vehicle. If the speed is below a certain threshold value, the loads from the accident will thereby be handled by other safety systems in the vehicle.

As the accident occurs, the inertial force from the accident and the seated occupant will force the seat 300 to slide forward from the rearward seating position towards the conventional driving seating position. This sliding will be allowed by mutual displacement between the upper and lower rails 1, 2. Since the two rails are indirectly interconnected by the strip 3, the strip 3 is forced to deform and thereby absorb inertial energy of the seat 200 and/or a seated occupant.

In short, the method, see Fig. 6, of operating the vehicle occupant protection system 1000 may be summarized as follows:
determining 1100, by using an accident sensor element 400, an imminent or ongoing vehicle accident;
determining 1200, by using a seating position sensor element 500, a seating position;
upon the determination of the seat 200 being in a rearward seating position and the occurrence of an imminent or ongoing vehicle accident:
   actuating 1300 the locking arrangement, thereby releasing the connection between the first and the second sub-arrangements 5, 6 to thereby allow the sliding of the seat 200 from the rearward seating position towards a conventional driving seating position, and using 1400 inertial energy from the vehicle accident to slide the seat from the rearward seating position towards the conventional driving seating position while inertial energy of the seat and/or a seated occupant is absorbed by a deformation of the strip 3 in the respective load absorption device 100.

It is realized by a person skilled in the art that features from various embodiments disclosed herein may be combined with one another to provide further alternative embodiments.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. Load absorption device (100) to be used with a vehicle seat (200), the device (100) comprising:
a rail arrangement comprising an upper rail (1) configured to be connected to a lower side of the vehicle seat (200), and a lower rail (2) configured to be fixedly connected to a top surface of a vehicle floor; wherein the upper and the lower rails (1, 2) are slidingly connected to each other to allow a longitudinal mutual displacement between the upper rail (1) and the lower rail (2);
a bracket (4) fixedly connected to the lower rail (2) or configured to be fixedly connected to a floor of the vehicle;
a strip (3) having first leg (15A) having a first end (16A), a second leg (15B) having a second end (16B), and a curved portion (15C) intermediate the first and second legs; and
a locking arrangement having a first sub-arrangement (5) being fixedly connected to the bracket (4), and a second sub-arrangement (6) being releasably connected to the first sub-arrangement (4); and wherein
the first leg (15A) of the strip (3) is slidably arranged in the bracket (4), and the second leg (15B) of the strip (3) is fixedly connected, directly or indirectly, to the upper rail (1) and to the second sub-arrangement (6); whereby
upon an actuation of the locking arrangement, the connection between the first and the second sub-arrangements (5, 6) is released, whereby the second sub-arrangement (6) together with the second end (16A) of the strip (3) and the upper rail (1) is allowed to displace in a first direction (L1) away from the bracket (4) while the first end (16A) of the strip (3) is allowed to translate in a second direction (L2) opposite the first direction (L1).

2. The load absorption device (100) according to claim 1, wherein the first sub-arrangement (5) comprises a tube (51) defining a gas chamber (52), said tube (51) containing an ignitor (53), and said first sub-arrangement (5) further comprising a split-nut (54) that connects the first sub-arrangement (5) to the second sub-arrangement (6).

3. The load absorption device (100) according to claim 2, wherein the split-nut (54) lockingly engages the second sub-arrangement (6) in the radial direction (R), and whereby an ignition of the ignitor (53) is configured to cause an axial displacement of the tube (51) in view of the split-nut (54), thereby forming a radial gap (55) between the tube (51) and the split-nut (54) allowing the split-nut (54) to release its locking engagement with the second sub-arrangement (6).

4. The load absorption device (100) according to any of claims 2 or 3, wherein the first sub-arrangement (5) further comprises a connector (56), said connector (56) encircling a portion of the second sub-arrangement (6) and forming an axially extending guiding surface (57) along an interface between the first sub-arrangement (5) and the second sub-arrangement (6).

5. The load absorption device (100) according to any of claims 1-4, wherein the second sub-arrangement (6) is a rod extending along the longitudinal extension of the upper and lower rails (1,2), and wherein said rod directly or indirectly connects to the upper rail (2).

6. The load absorption device (100) according to any of claims 1-5, wherein the first leg (15A) extends along an exterior side wall portion (12) of the lower rail (2).

7. The load absorption device (100) according to any of claims 1-6, wherein the bracket (4) comprises at least one guiding member (41) having an extension along a longitudinal extension of the bracket (4), said guiding member (41) being configured to longitudinally guide the first leg (15A) along the bracket (4).

8. The load absorption device (100) according to any of claims 1-7, wherein the first leg (15A) or the second leg (15B) along its longitudinal extension comprises a tapered portion (19) tapering in a direction towards the curved portion (15C).

9. The load absorption device (100) according to claim 8, wherein the tapered portion (19) is arranged adjacent the curved portion (15C) as seen in a normal operation of the load absorption device (100).

10. The load absorption device (100) according to claim 8, wherein the tapered portion (19) has the same tapering along two opposing longitudinally extending edge portions of the strip (3).

11. The load absorption device (100) according to claim 8, wherein the tapered portion (19) has a progressively increasing cross sectional area.

12. The load absorption device (100) according to claim 8, wherein the tapered portion (19) has a first tapered portion (19A) with a first tapering angle (α1) in view of a longitudinal centerline of the strip (3), and a second tapered portion (19B) with a second tapering angle (α2) in view of the longitudinal centerline of the strip (3), wherein the second tapering angle (α2) is larger than the first tapering angle (α1).

13. A vehicle occupant protection system, comprising:
a vehicle seat (200) configured to accommodate an occupant;
a load absorption device (100) according to any of claims 1-12, wherein the rail arrangement is configured to connect the vehicle seat to a vehicle floor;
an accident sensor element (400) adapted for determining an imminent or ongoing vehicle accident; and
a seating position sensor element (500) adapted for determining a seating position;
wherein, upon the determination that the rails (1, 2) in the rail arrangement are displaced to a position where the seat (200) is set in a rearward seating position and the occurrence of an imminent or ongoing vehicle accident, the locking arrangement is configured to be actuated, to thereby allow the second sub-arrangement (6), the second end (16A) of the strip (3) and the upper rail (1) to be displaced in the first direction (L1) away from the first sub-arrangement (5) and the bracket (4), and thereby allow the seat (200) to be slid from the rearward seating position towards a conventional driving seating position;
whereby the sliding of the seat (200) from the rearward seating position towards the conventional driving seating position is performed by using inertial energy from the vehicle accident while the strip (3) is forced to deform and thereby absorb inertial energy of the seat and/or a seated occupant.

14. A method of operating a vehicle occupant protection system in a vehicle, the vehicle comprising:
a seat (200) for accommodating an occupant, wherein the seat is slidably connected to the vehicle by a load absorption device (100) according to any of claims 1-12,
the method comprising:
determining (1100), by using an accident sensor element (400), an imminent or ongoing vehicle accident;
determining (1200), by using a seating position sensor element (500), a seating position;
upon the determination of the seat being in a rearward seating position and the occurrence of an imminent or ongoing vehicle accident:
actuating (1300) the locking arrangement thereby releasing the connection between the first and the second sub-arrangements (5, 6) to thereby allow the sliding of the seat (200) from the rearward seating position towards a conventional driving seating position, and using (1400) inertial energy from the vehicle accident to slide the seat (200) from the rearward seating position towards the conventional driving seating position while inertial energy of the seat and/or a seated occupant is absorbed by a deformation of the strip (3) in the load absorption device (100).
